# EUROPEAN PATENT SPECIFICATION

(11) **EP 2 284 371 B1**
(45) Date of publication and mention of the grant of the patent: **09.05.2012**
(21) Application number: 10170300.7
(22) Date of filing: 21.07.2010
(51) Int. Cl.: F01N 3/20

(54) **Exhaust gas purification apparatus**
Abgasreinigungsvorrichtung
Dispositif de purification des gaz d'échappement

(30) Priority: 05.08.2009 JP 2009182740
(43) Date of publication of application: 16.02.2011
(73) Proprietor: Kabushiki Kaisha Toyota Jidoshokki, Kariya-shi, Aichi 448-8671 (JP)
(72) Inventor: Kato, Yoshifumi, Kariya-shi Aichi 448-8671 (JP)
(74) Representative: TBK

(56) References cited:
- US-A1- 2009 025 368
- US-A1- 2009 173 064

## Description

### BACKGROUND OF THE INVENTION

The present invention relates to an exhaust gas purification apparatus and more particularly to an exhaust gas purification apparatus that purifies exhaust gas by removing nitrogen oxides (NOₓ) contained in the exhaust gas of a diesel engine with the aid of a urea selective catalytic reduction (SCR) catalyst.

A urea SCR system has been developed to purify exhaust gas by removing NOₓ contained in the exhaust gas of a diesel engine. The urea SCR system uses an SCR catalyst as a selective reduction catalyst to convert NOₓ into nitrogen (N₂) and water (H₂O) by the chemical reaction between NOₓ and ammonia (NH₃) produced by hydrolyzing urea water.

The SCR catalyst of the urea SCR system is provided in the exhaust gas passage formed between an engine and a muffler that is located downstream of the engine with respect to the flow of exhaust gas. An oxidation catalyst is provided in the exhaust gas passage at a position upstream of the SCR catalyst with respect to the flow of exhaust gas for promoting oxidization of hydrocarbons (HC) and carbon monoxide (CO) in exhaust gas to water (H₂O) and carbon dioxide (CO₂) and also for promoting oxidization of nitrogen monoxide (NO) in exhaust gas to nitrogen dioxide (NO₂). An injection valve is also provided upstream of the SCR catalyst for injecting urea water into exhaust gas. Additionally, a diesel particulate filter (DPF) is provided in the exhaust gas passage for reducing particulate matter (PM), such as carbon contained in exhaust gas.

Japanese Patent Application Publication 2006-274986 discloses an exhaust gas aftertreatment device including an NOₓ storage catalyst activated under a high temperature, a DPF located downstream of the NOₓ storage catalyst with respect to the flow of exhaust gas and having a urea SCR catalyst supported therein and activated under a low temperature, and a urea water injector located between the NOₓ storage catalyst and the DPF, all of which are housed in one case of the exhaust gas aftertreatment device. In this exhaust gas aftertreatment device, urea water is injected into exhaust gas by the urea water injector under a low temperature and then hydrolyzed thereby to produce ammonia, which is reacted with NOₓ thereby to produce harmless nitrogen (N₂) and water (H₂O). NOₓ contained in exhaust gas is stored by the NOₓ storage catalyst under a high temperature.

In order to produce ammonia by hydrolyzing urea water injected from the urea water injector, it is necessary to ensure reaction time for the injected urea water to be hydrolyzed before reaching the urea SCR catalyst. That is, a distance that is enough to ensure the reaction time is needed between the urea water injector and the urea SCR catalyst. However, a distance that is enough to ensure the reaction time is not provided between the urea water injector and the DPF having the urea SCR catalyst supported therein in the above-described exhaust gas aftertreatment device. Therefore, the urea water which is supplied to the urea SCR catalyst without being hydrolyzed into ammonia increases. Consequently, efficiency of removing NOₓ relative to the use of urea water deteriorates.

The present invention, which has been made in view of the above problems, is directed to an exhaust gas purification apparatus that improves the efficiency of removing NOₓ contained in exhaust gas relative to the use of urea water.

### SUMMARY OF THE INVENTION

In accordance with an aspect of the present invention, the exhaust gas purification apparatus includes an oxidation catalyst, an ammonia adsorption portion, a selective catalytic reduction catalyst and a urea water supply device. The oxidation catalyst is provided in a passage through which exhaust gas flows. The ammonia adsorption portion is located in the passage downstream of the oxidation catalyst with respect to the flow of the exhaust gas and operable to adsorb ammonia. The selective catalytic reduction catalyst is located in the passage downstream of the ammonia adsorption portion. The urea water supply device is provided for supplying urea water to the passage upstream of the selective catalytic reduction catalyst.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic view showing an exhaust gas purification apparatus according to a first embodiment of the present invention and its peripheral equipment;
Fig. 2 is a longitudinal sectional view showing the exhaust gas purification apparatus of Fig. 1;
Fig. 3 is a graph showing the relation between the temperature and the adsorbed amount of ammonia adsorption layer of the exhaust gas purification apparatus;
Fig. 4 is a longitudinal sectional view showing an exhaust gas purification apparatus according to a second embodiment of the present invention; and
Fig. 5 is a longitudinal sectional view showing an exhaust gas purification apparatus according to a third embodiment of the present invention.

### DETAILED DESCRIPTION OF THE PREFERRED EMBODIMENTS

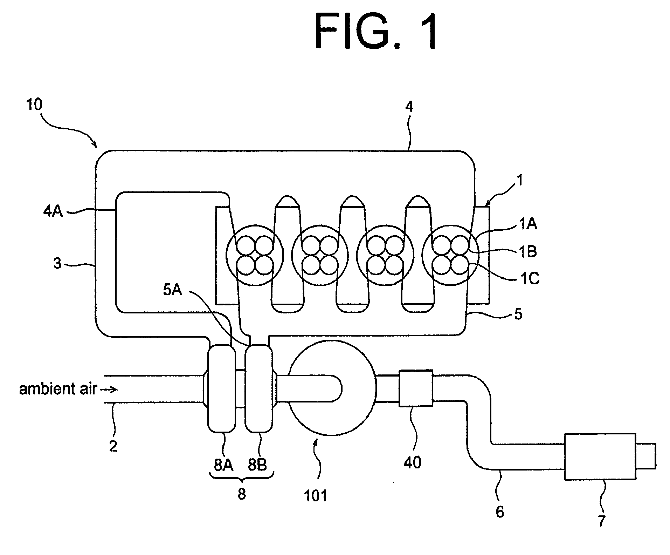

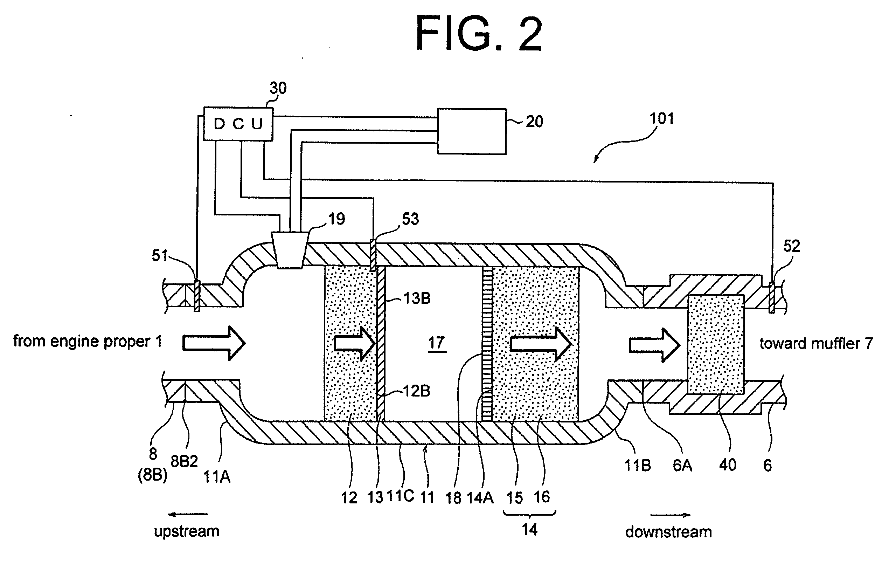

The following will describe the embodiments of the present invention with reference to the accompanying drawings. An exhaust gas purification apparatus 101 according to the first embodiment of the present invention and its peripheral equipment will be described with reference to Figs. 1 and 2. In the following embodiments, the exhaust gas purification apparatus is used for a diesel engine for a vehicle.

Referring to Fig. 1 showing the exhaust gas purification apparatus 101 and its peripheral equipment in schematic view, an engine proper 1 has a plurality of engine cylinders 1A each having a plurality of intake ports 1 B and a plurality of exhaust ports 1 C. An intake manifold 4 is connected to the intake ports 1B of the engine cylinders 1A for distributing intake air into the respective engine cylinders 1A. The intake manifold 4 has an inlet 4A through which air is drawn in. An engine intake pipe 3 has two opposite ends one of which is connected to the inlet 4A of the intake manifold 4 and the other of which is connected to a compressor housing 8A of the turbocharger 8. An intake pipe 2 is connected to the compressor housing 8A, through which ambient air is drawn in.

An exhaust manifold 5 is connected to the exhaust ports 1C of the engine cylinders 1A for collecting exhaust gas emitted from the exhaust ports 1C. The exhaust manifold 5 has an outlet 5A through which exhaust gas is emitted. A turbine housing 8B of the turbocharger 8 is connected to the outlet 5A of the exhaust manifold 5. The exhaust gas purification apparatus 101 having substantially a cylindrical form is connected to the turbine housing 8B and located on lateral side of the engine proper 1 at a position adjacent thereto. An exhaust pipe 6 is connected to the exhaust gas purification apparatus 101. A muffler 7 is connected to the downstream end of the exhaust pipe 6. Thus, the intake pipe 2, the turbocharger 8, the engine intake pipe 3 and the intake manifold 4 cooperate to form the inlet system in the vehicle (not shown). The exhaust manifold 5, the turbocharger 8, the exhaust gas purification apparatus 101, the exhaust pipe 6 and the muffler 7 cooperate to form the outlet system in the vehicle (not shown). It is noted that the engine proper 1, the engine intake pipe 3, the intake manifold 4, the exhaust manifold 5 and the turbocharger 8 cooperate to form an engine assembly 10.

Referring to Fig. 2 showing the exhaust gas purification apparatus 101 in longitudinal sectional view, it has a substantially cylindrical casing 11. The casing 11 has an upstream end portion 11A, a downstream end portion 11 B and a cylindrical intermediate portion 11C formed between the upstream end portion 11A and the downstream end portion 11B. The turbine housing 8B of the turbocharger 8 has an outlet 8B2 that is connected to the upstream end portion 11A of the casing 11. The exhaust pipe 6 has an upstream end 6A that is connected to the downstream end portion 11B of the casing 11. Thus, the interior of the casing 11 communicates with the interior of the turbine housing 8B and the interior of the exhaust pipe 6.

The casing 11 has therein a first oxidation catalyst layer 12 and a diesel particulate filter (DPF) body 15 disposed downstream of the first oxidation catalyst layer 12 with respect to the flow of exhaust gas. The first oxidation catalyst layer 12 supports therein the oxidation catalyst of the present invention. It is noted that the DPF body 15 serves as the particulate matter collector of the present invention. The first oxidation catalyst layer 12 and the DPF body 15 have a cylindrical form extending perpendicularly to the axis of the cylindrical portion 11C of the casing 11 so as to close the interior of the cylindrical portion 11C, as shown in Fig. 2. The first oxidation catalyst layer 12 and the DPF body 15 are spaced away from each other and have therebetween a space 17.

The first oxidation catalyst layer 12 is formed by a layer in which the oxidation catalyst is supported by substrate (not shown) for promoting the oxidation of hydrocarbons (HC) and carbon monoxide (CO) contained in exhaust gas to water (H₂O) and carbon dioxide (CO₂) and also for promoting oxidation of nitrogen oxide (NO) contained in exhaust gas to nitrogen dioxide (NO₂). For example, platinum (Pt), palladium (Pd), rhodium (Rh), silver (Ag), iron (Fe), copper (Cu), nickel (Ni), gold (Au), an alloy of two or more kinds of these catalyst materials and so forth are preferably used as the oxidation catalyst of the first oxidation catalyst layer 12. The oxidation catalyst of the first oxidation catalyst layer 12 has a property of activating the oxidizing action under a temperature that is higher than a predetermined temperature. The oxidation catalyst of the first oxidation catalyst layer 12 formed by the above-mentioned catalyst materials serves to activate the oxidizing action under a temperature that is higher than 200 degrees centigrade (°C). The activation of the oxidizing action generally means that 50% of substances for oxidation is oxidized to a desired state.

The DPF body 15 is made of a porous material such as ceramic and used for collecting particulate matter (PM) contained in exhaust gas.

A (urea) SCR catalyst 16 as a selective reduction catalyst is supported in the DPF body 15 by any suitable means such as coating. The DPF body 15 and the SCR catalyst 16 cooperate to form a DPF 14 with catalyst. That is, the DPF body 15 and the SCR catalyst 16 are integrated into the DPF 14. The DPF 14 may be formed in such a way that the DPF body 15 and the SCR catalyst 16 are integrated by providing a catalyst layer of the SCR catalyst 16 downstream of the DPF body 15. It is noted that the selective reduction catalyst causes chemical reaction selectively between specific substances. The SCR catalyst 16 of the present embodiment causes chemical reaction between nitrogen oxides (NOₓ) and ammonia (NH₃) as a reducing agent, thereby reducing NOₓ to N₂ (nitrogen) and water. The SCR catalyst 16 should preferably be made of an oxide of substances such as zirconium (Zr), titanium (Ti), silicon (Si), cerium (Ce) and tungsten (W), any complex of these oxides, a catalyst of ZSM-5 zeolite which is partially replaced by metal such as iron (Fe) and copper (Cu), and so forth.

The first oxidation catalyst layer 12 has a downstream end face 12B facing the DPF 14. An ammonia adsorption layer 13 having ammonia adsorption property is formed on at least part of the downstream end face 12B. The ammonia adsorption layer 13 serves as the ammonia adsorption portion of the present invention. The ammonia adsorption layer 13 is formed by coating a substrate (not shown) provided on the downstream end face 12B of the first oxidation catalyst layer 12 with a material having ammonia adsorption property. The ammonia adsorption layer 13 may be formed in such a way that the substrate (not shown) which forms the first oxidation catalyst layer 12 is divided into two sections and the sections are coated by dipping with an oxidation catalyst material and a material having ammonia adsorption property, respectively. ZSM-5 zeolite (SiO₂-Al₂O₃), metal-replaced ZSM-5 zeolite, β-zeolite, metal-replaced β-zeolite and zirconia (ZrO₂) are preferably used as the material of the ammonia adsorption layer 13.

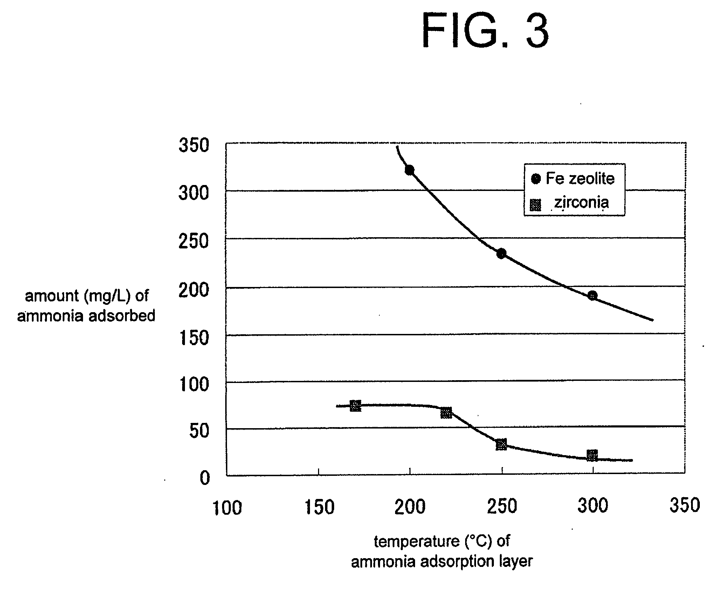

Ammonia adsorption property of the ammonia adsorption layer 13, or the amount of ammonia adsorbed, tends to depend on the temperature of the ammonia adsorption layer 13. Referring to Fig. 3 showing the relation between the temperature and the amount of ammonia adsorbed by the ammonia adsorption layer 13 in graph, Fe zeolite as metal-replaced matter (metal-replaced ZSM-5 zeolite and metal-replaced β-zeolite) of the above-mentioned zeolite and zirconia used as the ammonia adsorption layer 13 are compared. The horizontal axis of the graph represents the temperature of the ammonia adsorption layer 13 and the vertical axis thereof represents the adsorbed weight of ammonia per unit volume of the ammonia adsorption layer 13. Fe zeolite and zirconia supported by the substrate forming the ammonia adsorption layer 13 have substantially the same concentration. That is, Fe zeolite and zirconia of substantially the same weight per unit volume are supported by the substrate.

According to the graph, the ammonia adsorption layer 13, in which Fe zeolite is supported, reduces the amount of ammonia adsorbed with an increase of its temperature. In the case of the ammonia adsorption layer 13, in which zirconia is supported, the amount of ammonia adsorbed is constant until the temperature of the ammonia adsorption layer 13 rises to about 220°C, but the amount of ammonia adsorbed decreases with an increase of its temperature in the range above 220°C. As is apparent from Fig. 3, the amount of ammonia adsorbed by the ammonia adsorption layer 13 having supported therein Fe zeolite is larger than that adsorbed by the ammonia adsorption layer 13 having supported therein zirconia.

Referring back to Fig. 2, the cylindrical portion 11C of the casing 11 is provided with an injection valve 19 at a position upstream of and spaced from the first oxidation catalyst layer 12. The injection valve 19 is provided by an electromagnetic valve and serves as the urea water supply device of the present invention. In addition, the injection valve 19 is connected to a urea water tank 20 mounted on the vehicle (not shown) for injecting urea water supplied from the urea water tank 20 into the region in the casing 11 that is upstream of the first oxidation catalyst layer 12. Further, the injection valve 19 is electrically connected to a dosing control unit (DCU) 30 which controls the opening and closing operation of the injection valve 19. The urea water tank 20 is provided with a motor pump (not shown) for supplying urea water in the urea water tank 20 to the injection valve 19. The motor pump is electrically connected to the DCU 30, which also controls the operation of the motor pump. The DCU 30 may be provided separately to each of the injection valve 19 and the motor pump of the urea water tank 20. Alternatively, the DCU 30 may be integrated with an ECU of the vehicle (not shown).

The DPF 14 has an upstream end face 14A, which is provided with a cylindrical mixer 18 for distributing substances contained in exhaust gas throughout the upstream end face 14A evenly. The mixer disclosed by publication such as Japanese Patent Application Publication No. 6-509020T or No. 2006-9608 may be used as the mixer 18 of the present embodiment. The mixer disclosed by Japanese Patent Application Publication No. 6-509020T is made in the form of a lattice having a number of cells as the gas passage which causes the exhaust gas to swirl in the cells and also to flow toward their adjacent cells, thereby distributing the substances contained in the exhaust gas throughout the gas passage. The mixer disclosed by Japanese Patent Application Publication No. 2006-9608 is provided with a plurality of dispersion plates located perpendicularly to the direction of gas passage for causing the exhaust gas to meander, thereby distributing the substances contained in the exhaust gas throughout the gas passage.

A second oxidation catalyst layer 40, in which oxidation catalyst is supported, is provided in the exhaust pipe 6 located downstream of the exhaust gas purification apparatus 101 for breaking down ammonia by oxidation. For example, platinum (Pt), palladium (Pd), silver (Ag), iron (Fe), copper (Cu), nickel (Ni), gold (Au) and so forth are preferably used as the oxidation catalyst of the second oxidation catalyst layer 40.

An exhaust-gas temperature sensor 51 is provided in the upstream end portion 11A of the casing 11 for detecting the temperature of exhaust gas. The exhaust-gas temperature sensor 51 is electrically connected to the DCU 30 for sending the detected temperature information to the DCU 30. A catalyst temperature sensor 53 is provided in the cylindrical portion 11C of the casing 11 for detecting the temperature of the first oxidation catalyst layer 12. The catalyst temperature sensor 53 is electrically connected to the DCU 30 for sending the detected temperature information to the DCU 30.

An NOₓ sensor 52 is provided in the exhaust pipe 6 at a position downstream of the second oxidation catalyst layer 40 for detecting the concentration of NOₓ. The NOₓ sensor 52 is electrically connected to the DCU 30 for sending the detected concentration information to the DCU 30. As described above, the exhaust gas purification apparatus 101 has an exhaust gas purification mechanism having an SCR catalyst and an exhaust gas purification mechanism having a DPF integrated together and mounted to the engine assembly 10 adjacently to the engine proper 1 (refer to Fig. 1).

The following will describe the operation of the exhaust gas purification apparatus 101 and its peripheral equipment with reference to Figs. 1 and 2. Referring to Fig. 1, when the engine proper 1 is operated, ambient air is drawn into the compressor housing 8A of the turbocharger 8 through the intake pipe 2. The air is pumped by a compressor wheel (not shown) of the compressor housing 8A and sent to the engine intake pipe 3. The air in the engine intake pipe 3 flows into the engine cylinder 1A of the engine proper 1 via the intake manifold 4. The air in the engine cylinder 1A is mixed with the fuel (light oil) injected into the engine cylinder 1A, and air-fuel mixture in the engine cylinder 1A is ignited spontaneously.

Exhaust gas resulting from the combustion of the air-fuel mixture is emitted through the exhaust ports 1C to the exhaust manifold 5 to be colleted therein. The exhaust gas flows into the turbine housing 8B of the turbocharger 8. The exhaust gas in the turbine housing 8B is discharged into the exhaust gas purification apparatus 101 while speeding up the turbine wheel (not shown) of the turbine housing 8B and the compressor wheel connected to the turbine wheel. After flowing through the exhaust gas purification apparatus 101, the exhaust gas is discharged out from the vehicle (no shown) via the second oxidation catalyst layer 40, the exhaust pipe 6 and the muffler 7.

Referring to Fig. 2, all the exhaust gas which has flowed into the exhaust gas purification apparatus 101 passes through the first oxidation catalyst layer 12 first. When the exhaust gas flows through the first oxidation catalyst layer 12, hydrocarbons and carbon monoxide contained in the exhaust gas are oxidized to carbon dioxide and water while part of NO contained in the exhaust gas is oxidized to NO₂ which is reduced more easily than NO. The exhaust gas which has flowed through the first oxidation catalyst layer 12 passes through the ammonia adsorption layer 13 and the mixer 18 and then flows into the DPF 14. The DPF body 15 of the DPF 14 collects PM contained in the exhaust gas flowing through the DPF 14.

Simultaneously, the DCU 30 operates the motor pump of the urea water tank 20 and opens the injection valve 19, so that urea water from the urea water tank 20 is injected by the injection valve 19 into the space of the casing 11 that is located upstream of the first oxidation catalyst layer 12. The injected urea water is entrained by the exhaust gas and flowed to the first oxidation catalyst layer 12 with the exhaust gas. Before flowing to the first oxidation catalyst layer 12, part of the urea water is hydrolyzed under the influence of the heat of the exhaust gas thereby to produce ammonia and carbon dioxide. The first oxidation catalyst layer 12 has therein the heat due to the exhaust gas flowing therethrough and the reaction heat due to oxidation of substances such as NO contained in the exhaust gas. Therefore, when the urea water flows through the first oxidation catalyst layer 12 with exhaust gas, major part of the urea water is hydrolyzed under the influence of the heat of the first oxidation catalyst layer 12 and the heat of the exhaust gas flowing through the first oxidation catalyst layer 12, thereby producing ammonia.

On the other hand, when the oxidation catalyst of the first oxidation catalyst layer 12 is in the range of temperature above a predetermined reference temperature T_{c}°C, its oxidation action is activated, so that ammonia can be broken down easily by oxidation. Therefore, in order to prevent ammonia from being broken down by oxidation due to the first oxidation catalyst layer 12, the DCU 30 performs either one of the following two operations (1) and (2) in accordance with the temperature detected by the catalyst temperature sensor 53.
(1) The following will describe the case when the temperature detected by the catalyst temperature sensor 53 is not higher than the reference temperature T_{c}°C. When the oxidation catalyst of the first oxidation catalyst layer 12 is made of any of the above-mentioned oxidation materials, the oxidation of the oxidation catalyst is activated in the temperature range above 200°C. Therefore, the reference temperature T_{c}°C is set at 200°C in the following description. When the temperature detected by the catalyst temperature sensor 53 is not higher than 200°C and the temperature detected by the exhaust-gas temperature sensor 51 is at a level that is high enough for the hydrolysis of urea water to take place, the DCU 30 operates the motor pump of the urea water tank 20 and opens the injection valve 19, thereby injecting urea water from the injection valve 19 to the space of the cylindrical portion 11C that is upstream of the first oxidation catalyst layer 12. When the temperature detected by the exhaust-gas temperature sensor 51 is lower than the above level, the DCU 30 stops operating the motor pump of the urea water tank 20 and keeps the injection valve 19 closed. The temperature at which the hydrolysis of urea water can take place is about 120°C or higher.
   Before flowing to the first oxidation catalyst layer 12, part of the injected urea water is hydrolyzed to ammonia under the heat of the exhaust gas. The ammonia flows to the first oxidation catalyst layer 12 with the exhaust gas. Major part of the urea water flowing through the first oxidation catalyst layer 12 is hydrolyzed to ammonia under the heat of the first oxidation catalyst layer 12 and the heat of the exhaust gas flowing through the first oxidation catalyst layer 12. Therefore, the exhaust gas flows through the first oxidation catalyst layer 12 with the ammonia which has flowed into the first oxidation catalyst layer 12 and the ammonia which has been produced in the first oxidation catalyst layer 12, and then through the ammonia adsorption layer 13. The ammonia contained in the exhaust gas flowing through the first oxidation catalyst layer 12 is not broken down by the oxidation catalyst of the first oxidation catalyst layer 12 whose oxidation is not activated. The ammonia contained in the exhaust gas flowing through the ammonia adsorption layer 13 is adsorbed and held by the ammonia adsorption layer 13.
   The exhaust gas which has passed through the ammonia adsorption layer 13 flows into the mixer 18 through the space 17. The exhaust gas is dispersed by the mixer 18 and then flows into the DPF 14. The exhaust gas contains urea water which has not been hydrolyzed in the first oxidation catalyst layer 12. The urea water is hydrolyzed to ammonia under the heat of the exhaust gas flowing with the urea water before reaching the DPF 14.
   The ammonia contained in the exhaust gas which has flowed into the DPF 14 performs either one of the following two operations (1A) and (1B) depending on the temperature of the SCR catalyst 16 of the DPF 14. It is noted that the temperature of the SCR catalyst 16 is substantially the same as that of the exhaust gas flowing through the DPF 14. That is, the temperature of the SCR catalyst 16 is substantially the same as the temperature detected by the catalyst temperature sensor 53 and, therefore, this detected temperature can be used as the temperature of the SCR catalyst 16.
(1A) The following will describe the case when the temperature of the SCR catalyst 16 is lower than the temperature Ts°C at which the SCR catalyst 16 is activated. The temperature Tₛ°C in the following description is 150°C that is a general catalyst activation temperature. When the temperature of the SCR catalyst 16 is lower than 150°C and hence the SCR catalyst 16 is not activated, ammonia contained in the exhaust gas flowed into the DPF 14 does not reduce NOₓ (including NO and NO₂) and emitted from the exhaust gas purification apparatus 101 into the exhaust pipe 6 with the exhaust gas. The exhaust gas flows through the second oxidation catalyst layer 40 in the exhaust pipe 6 and then is emitted from the vehicle (not shown) through the muffler 7. Ammonia contained in the exhaust gas and flowing through the second oxidation catalyst layer 40 is broken down by oxidation, so that no harmful ammonia is emitted from the vehicle (not shown).
(1B) The following will describe the case when the temperature of the SCR catalyst 16 is Tₛ°C (150°C) at which the SCR catalyst 16 is activated or higher. Ammonia contained in the exhaust gas which has been flowed to the DPF 14 reduces NOₓ, contained in the exhaust gas to N₂ by the aid of the SCR catalyst 16. Excessive amount of ammonia unused for the reduction of NOₓ is emitted from the exhaust gas purification apparatus 101 into the exhaust pipe 6 with the exhaust gas. Ammonia contained in the exhaust gas is broken down by the second oxidation catalyst layer 40 in the exhaust pipe 6 and then is emitted from the vehicle (not shown) through the muffler 7, so that no harmful ammonia is emitted from the vehicle (not shown). The DCU 30 controls the amount of urea water injected from the injection valve 19 so that the value of NOₓ concentration sent from the NOₓ sensor 52, or the value of NOₓ concentration contained in the exhaust gas which has flowed through the second oxidation catalyst layer 40, is not greater than a predetermined concentration. Thus, the DCU 30 controls the amount of ammonia supplied to the DPF 14.
(2) The following will describe the case when the temperature detected by the catalyst temperature sensor 53 is higher than the reference temperature T_{c}°C (200°C). In this case, the oxidation catalyst of the first oxidation catalyst layer 12 is activated. Therefore, the DCU 30 stops operating the motor pump of the urea water tank 20 and closes the injection valve 19, thereby stopping urea water from being injected from the injection valve 19. Thus, the exhaust gas introduced into the casing 11 flows through the first oxidation catalyst layer 12 and the ammonia adsorption layer 13 without urea water and ammonia. The ammonia adsorption layer 13 has a great amount of ammonia, which has been adsorbed therein when the temperature of the SCR catalyst 16 is not higher than 200°C.

When the temperature of the ammonia adsorption layer 13 is in the range above 200°C, the amount of ammonia adsorbed tends to reduce with an increase of temperature of the ammonia adsorption layer 13, as shown in Fig. 3. The temperature of the ammonia adsorption layer 13 is substantially the same as the temperature detected by the catalyst temperature sensor 53 and, therefore, the detected temperature can be used as the temperature of the ammonia adsorption layer 13. Therefore, the ammonia adsorption layer 13 releases adsorbed ammonia from the ammonia adsorption layer 13 when the temperature detected by the catalyst temperature sensor 53 is above 200°C, and the releasing amount of ammonia is increased with an increase of the temperature. Thus, the exhaust gas passing through the ammonia adsorption layer 13 takes in ammonia released from the ammonia adsorption layer 13, and flows to the DPF 14 through the space 17 and the mixer 18.

The temperature of the SCR catalyst 16 of the DPF 14 which is substantially the same as the temperature detected by the catalyst temperature sensor 53 is higher than 200°C, so that the SCR catalyst 16 is activated. Therefore, NOₓ contained in the exhaust gas flowed to the DPF 14 is reduced to N₂ by ammonia contained in the exhaust gas under the action of the SCR catalyst 16. The exhaust gas purified by thus reducing NOₓ is emitted from the exhaust gas purification apparatus 101. Ammonia unused for the reduction of NOₓ is emitted from the exhaust gas purification apparatus 101 into the exhaust pipe 6 with the exhaust gas. Ammonia contained in the exhaust gas is broken down by the second oxidation catalyst layer 40 in the exhaust pipe 6 and then is emitted from the vehicle (not shown) through the muffler 7, so that no harmful ammonia is emitted from the vehicle.

When the engine proper 1 (refer to Fig. 1) is operated at such a high speed or under such a high load that increases discharge amount of NOₓ, the temperature of the exhaust gas rises and, therefore, the temperature of the ammonia adsorption layer 13 rises, so that discharge amount of ammonia from the ammonia adsorption layer 13 is increased. Therefore, the amount of ammonia in accordance with the increasing discharge amount of NOₓ from the engine proper 1 is ensured. In the above description, the temperature detected by the catalyst temperature sensor 53 is substantially the same as the temperature detected by the exhaust-gas temperature sensor 51 and, therefore, the detected temperature of the exhaust-gas temperature sensor 51 may be used to represent the detected temperature of the catalyst temperature sensor 53.

Referring to Fig. 1, exhaust gas which is discharged directly from the turbocharger 8 (or from the engine proper 1) and the temperature of which is decreased only little flows into the exhaust gas purification apparatus 101. Heat of the operating engine proper 1 is transmitted to the exterior of the casing 11 (refer to Fig. 2) of the exhaust gas purification apparatus 101 located immediately adjacent to the engine proper 1 and the heat is then transmitted further to the interior of the casing 11. Referring to Fig. 2, the interior of the casing 11 and the DPF 14 are heated by the heat of the exhaust gas discharged directly from the turbocharger 8 and the heat transmitted from the engine proper 1, so that the interior of the casing 11 and the DPF 14 tend to be heated easily. Thus, during a cold start of the engine proper 1, the time for urea water in the casing 11 to reach its hydrolyzing temperature and the time for the SCR catalyst 16 to reach its activating temperature are shortened. Therefore, the exhaust gas purification apparatus 101 can start its exhaust gas purifying operation to remove NOₓ in a short time after the cold start of the engine proper 1. Consequently, the efficiency of removing NOₓ is improved.

As described above, the exhaust gas purification apparatus 101 includes the first oxidation catalyst layer 12, the ammonia adsorption layer 13, the SCR catalyst 16 and at least one injection valve 19. More specifically, the first oxidation catalyst layer 12 is provided in a passage through which exhaust gas flows. The ammonia adsorption layer 13 is located downstream of the first oxidation catalyst layer 12 with respect to the flow of the exhaust gas and operable to adsorb ammonia. The SCR catalyst 16 is located downstream of the ammonia adsorption layer 13. The injection valve 19 is provided for supplying urea water to the passage upstream of the SCR catalyst 16. Ammonia produced by hydrolyzing urea water is adsorbed by the ammonia adsorption layer 13 located downstream of the first oxidation catalyst layer 12. The ammonia thus adsorbed is released from the ammonia adsorption layer 13 with an increasing temperature of the ammonia adsorption layer 13 without flowing into the first oxidation catalyst layer 12. Breaking down of ammonia by the first oxidation catalyst layer 12 is prevented and the produced ammonia is used efficiently and, therefore, efficiency of purification of exhaust gas by removing NOₓ relative to urea water usage is improved.

Supplying urea water to the passage upstream of the first oxidation catalyst layer 12 and allowing the urea water to flow through the first oxidation catalyst layer 12, urea water can receive not only the heat of the exhaust gas but also the heat of the first oxidation catalyst layer 12 having the heat of the exhaust gas and the reaction heat due to the oxidation of substances such NO contained in the exhaust gas, with the result that the hydrolytic action of urea water is promoted. Therefore, the urea water is efficiently hydrolyzed thereby to produce ammonia, which improves efficiency of removing NOₓ by urea water. Supplying urea water to the passage upstream of the first oxidation catalyst layer 12, the time for the urea water to stay upstream of the ammonia adsorption layer 13 before reaching the ammonia adsorption layer 13 is increased, so that the efficiency of hydrolysis of the urea water is enhanced. Therefore, the efficiency of purification of exhaust gas by removal of nitrogen oxides by urea water in the exhaust gas purification apparatus 101 is improved.

Supplying urea water to the passage upstream of the first oxidation catalyst layer 12, the efficiency of hydrolysis of urea water is improved because time enough for the urea water to be hydrolyzed before reaching the ammonia adsorption layer 13 is ensured. Thus, reduction of the purification performance of the exhaust gas purification apparatus 101 due to poor efficiency of hydrolysis of urea water between the ammonia adsorption layer 13 and the DPF 14 is prevented. Therefore, the distance between the ammonia adsorption layer 13 and the DPF 14 can be shortened and the exhaust gas purification apparatus 101 can be made in compact, accordingly.

Allowing the urea water to flow through the first oxidation catalyst layer 12, the urea water is distributed in directions perpendicular to the axis of the cylindrical portion 11C of the casing 11 while flowing through the first oxidation catalyst layer 12. Thus, the ammonia produced from the urea water is adsorbed into the ammonia adsorption layer 13 in a distributed manner, and the ammonia released from the ammonia adsorption layer 13 is supplied to the SCR catalyst 16 of the DPF 14 also in a distributed manner. Therefore, the efficiency of reduction of NOₓ by ammonia is improved under the action of the SCR catalyst 16.

Urea water is supplied from the injection valve 19 when the temperature of the oxidation catalyst of the first oxidation catalyst layer 12 is not higher than the temperature at which oxidation action of the oxidation catalyst of the first oxidation catalyst layer 12 is activated. Thus, the ammonia produced by the hydrolysis of the urea water does not flow through the activated first oxidation catalyst layer 12, so that oxidative breakdown of the ammonia by the first oxidation catalyst layer 12 is prevented. Therefore, the produced ammonia is used efficiently, and efficiency of purification of exhaust gas relative to urea water usage is improved. The SCR catalyst 16 which is supported by the DPF body 15 is integrated with the DPF body 15, so that the exhaust gas purification apparatus 101 can be made in compact. In addition, since the first oxidation catalyst layer 12, the ammonia adsorption layer 13, the SCR catalyst 16 integrated with the DPF body 15, and the injection valve 19 are provided in one casing 11, the exhaust gas purification apparatus 101 can be made in compact.

In the exhaust gas purification apparatus 101, the reduction of NOₓ contained in the exhaust gas largely depends on the use of the ammonia adsorbed and held by the ammonia adsorption layer 13, and the dependency of NOₓ reduction on the use of the ammonia produced from the urea water between the ammonia adsorption layer 13 and the DPF 14 is lessened. Therefore, efficiency of hydrolysis of urea water, which is influenced significantly by the time to stay between the ammonia adsorption layer 13 and the DPF 14, hardly reduces the purification performance of the exhaust gas purification apparatus 101, so that the distance between the ammonia adsorption layer 13 and the DPF 14 can be shortened and the exhaust gas purification apparatus 101 can be made in compact. Since the exhaust gas purification apparatus 101 is mounted to the engine assembly 10, high-temperature exhaust gas which is emitted from the engine assembly 10 and the temperature of which is decreased very little is flowed into the exhaust gas purification apparatus 101. In addition, the heat generated by the engine proper 1 in operation is transmitted to the interior of the casing 11 of the exhaust gas purification apparatus 101. Thus, during a cold start of the engine proper 1, the time for urea water in the casing 11 to reach its hydrolyzing temperature and the time for the SCR catalyst 16 to reach its activating temperature are shortened. Therefore, the exhaust gas purification apparatus 101 can start its exhaust gas purifying operation to remove NOₓ in a short time after the cold start of the engine proper 1. Consequently, purification efficiency of exhaust gas by removal of NOₓ is improved.

The following will describe the second embodiment of the present invention. The exhaust gas purification apparatus 102 according to the second embodiment of the present invention differs from the exhaust gas purification apparatus 101 of the first embodiment in that an injection valve 29 corresponding to the injection valve 19 of the exhaust gas purification apparatus 101 according to the first embodiment is provided downstream of the ammonia adsorption layer 13. For the sake of convenience of explanation, like or same parts or elements will be referred to by the same reference numerals as those which have been used in the first embodiment, and the description thereof will be omitted.

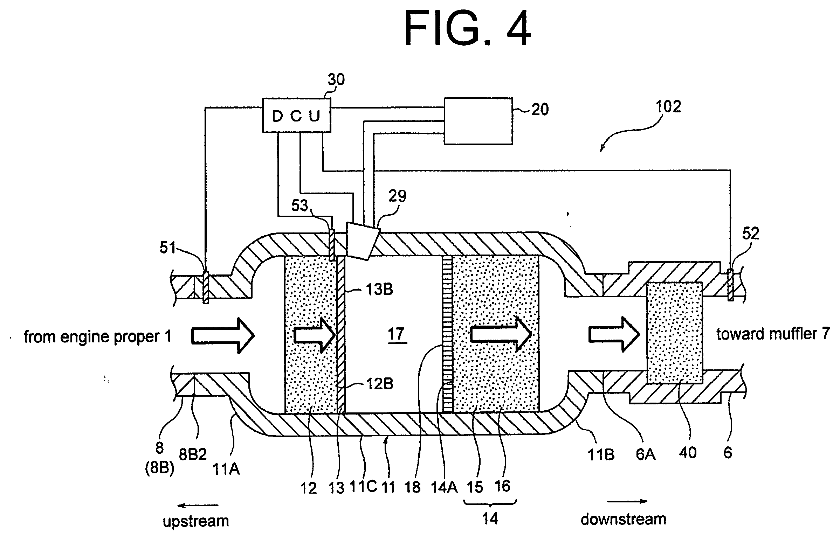

Referring to Fig. 4 showing the longitudinal sectional view of the exhaust gas purification apparatus 102 according to the second embodiment, as in the first embodiment, the casing 11 of the exhaust gas purification apparatus 102 has therein the first oxidation catalyst layer 12, the ammonia adsorption layer 13 and the DPF 14 which are located in this order along the flow of exhaust gas. The injection valve 29 is located between the ammonia adsorption layer 13 and the DPF 14 for directing urea water supplied from the urea water tank 20 toward a downstream end face 13B of the ammonia adsorption layer 13. The injection valve 29 serves as the urea water supply device of the present invention. In addition, the mixer 18 is provided on the upstream end face 14A of the DPF 14. The rest of the structure of the second embodiment is substantially the same as that of the first embodiment, and the description thereof will be omitted.

The following will describe the operation of the exhaust gas purification apparatus 102 of the second embodiment. Referring to Fig. 4, the exhaust gas purification apparatus 102 is formed so that the DCU 30 controls the opening and closing operation of the injection valve 29 and also the operation of the motor pump of the urea water tank 20 in accordance with the temperature detected by the catalyst temperature sensor 53. When the temperature detected by the catalyst temperature sensor 53 is Tₛ°C at which the SCR catalyst 16 is activated or higher, the DCU 30 operates the motor pump of the urea water tank 20 and opens the injection valve 29, thereby causing urea water to be injected toward the downstream end face 13B of the ammonia adsorption layer 13 via the injection valve 29. It is noted that the temperature Tₛ°C at which the SCR catalyst 16 is activated is 150°C as in the first embodiment.

When the temperature detected by the catalyst temperature sensor 53 is lower than 150°C at which the SCR catalyst 16 is activated, on the other hand, the DCU 30 stops the operation of the motor pump of the urea water tank 20 and keeps the injection valve 29 closed. When the temperature detected by the catalyst temperature sensor 53 is 150°C or higher, part of the urea water which is injected from the injection valve 29 is hydrolyzed to ammonia under the influence of the heat of the exhaust gas during the time from when the urea water is injected until when it comes in contact with the ammonia adsorption layer 13, and such ammonia is adsorbed by the ammonia adsorption layer 13.

The rest of the urea water which has not been hydrolyzed before it comes in contact with the ammonia adsorption layer 13 flows to the mixer 18 with the exhaust gas flowing through the space 17 and then to the DPF 14. Such urea water is hydrolyzed to ammonia under the influence of the heat of the exhaust gas flowing therewith through the space 17 and the mixer 18. Therefore, the ammonia produced when the urea water flows through the space 17 and the mixer 18 flows to the DPF 14, and the ammonia released from the ammonia adsorption layer 13, whose temperature increases with an increase of the temperature of the exhaust gas, flows also to the DPF 14. The ammonia flowed to the DPF 14 reduces NOₓ contained in the exhaust gas to N₂ by the aid of the SCR catalyst 16.

The DCU 30 controls the amount of urea water injected from the injection valve 29 so that the value of NOₓ concentration sent from the NOₓ sensor 52 is not greater than a predetermined value. Thus, the DCU 30 controls the amount of ammonia supplied to the DPF 14. Especially where the temperature detected by the catalyst temperature sensor 53 is higher than 200°C and hence the amount of ammonia released from the ammonia adsorption layer 13 increases, the ammonia adsorption layer 13 becomes the main ammonia supplier. The injection valve 29 then serves as a supplementary ammonia supplier. The rest of the operation of the exhaust gas purification apparatus 102 according to the second embodiment is substantially the same as that according to the first embodiment and, therefore, the description thereof is omitted.

Thus, the exhaust gas purification apparatus 102 of the second embodiment offers substantially the same effects as that of the first embodiment. Since the injection valve 29 supplies urea water to the passage downstream of the ammonia adsorption layer 13, no urea water is supplied to the first oxidation catalyst layer 12. Ammonia produced by hydrolyzing the urea water is not supplied to the first oxidation catalyst layer 12, either. Therefore, breaking down of the ammonia by the first oxidation catalyst layer 12 is prevented.

The following will describe the third embodiment of the present invention. The exhaust gas purification apparatus 103 according to the third embodiment of the present invention includes both the injection valve 19 of the exhaust gas purification apparatus 101 of the first embodiment and the injection valve 29 of the exhaust gas purification apparatus 102 of the second embodiment.

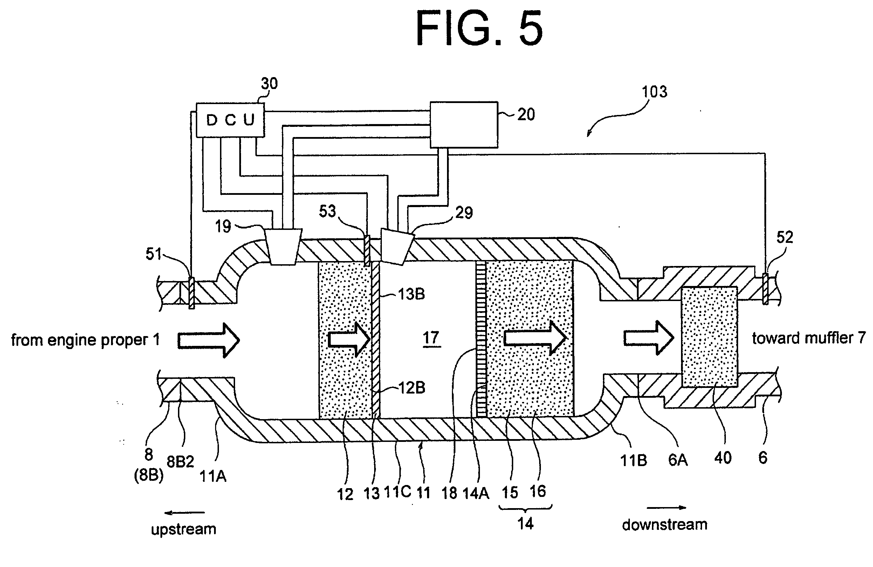

Referring to Fig. 5 showing the longitudinal sectional view of the exhaust gas purification apparatus 103 according to the third embodiment, as in the first embodiment, the casing 11 of the exhaust gas purification apparatus 103 has therein the first oxidation catalyst layer 12, the ammonia adsorption layer 13 and the DPF 14 having the DPF body 15 and the SCR catalyst 16, the injection valve 19 and the mixer 18. The casing 11 of the exhaust gas purification apparatus 103 has further therein the injection valve 29 at a position between the ammonia adsorption layer 13 and the DPF 14 as in the second embodiment. The injection valve 19 of the third embodiment serves as the first urea water supply device of the present invention and the injection valve 29 of the third embodiment as the second urea water supply device of the present invention. The rest of the structure of the exhaust gas purification apparatus 103 of the third embodiment is substantially the same as that of the first embodiment and, therefore, the description thereof is omitted.

The following will describe the operation of the exhaust gas purification apparatus 103 of the third embodiment. The operation of the injection valve 19 of the exhaust gas purification apparatus 103 is performed as in the first embodiment. The injection valve 29 is normally operable to inject urea water when no urea water is supplied from the injection valve 19. That is, when the temperature detected by the catalyst temperature sensor 53 is higher than the reference temperature T_{c}°C (200°C), urea water is injected from the injection valve 29.

When the temperature detected by the catalyst temperature sensor 53 is higher than 200°C, NOₓ contained in the exhaust gas in the DPF 14 is reduced by using ammonia released from the ammonia adsorption layer 13. However, when the amount of ammonia released from the ammonia adsorption layer 13 becomes deficient, urea water is supplied from the injection valve 29 to supply additional ammonia. When the NOₓ concentration detected by the NOx sensor 52 is higher than a predetermined value, the DCU 30 determines that the amount of ammonia released from the ammonia adsorption layer 13 is deficient and controls the supply of urea water from the injection valve 29 by adjusting opening of the injection valve 29 so that the NOₓ concentration is not greater than the predetermined value. Supply of urea water by the injection valve 29 may be performed when the temperature detected by the catalyst temperature sensor 53 is not higher than 200°C of the reference temperature. Supply of urea water by the injection valve 29 is performed, for example, when the amount of ammonia supplied to the DPF 14 without being adsorbed by the ammonia adsorption layer 13 out of the ammonia produced from urea water injected by the injection valve 19 is insufficient.

Thus, the exhaust gas purification apparatus 103 of the third embodiment offers substantially the same effects as that of the first embodiment. In the case when NOₓ contained in exhaust gas cannot be sufficiently reduced by only the ammonia released from the ammonia adsorption layer 13, the injection valve 29 of the exhaust gas purification apparatus 103 supplies additional urea water, thereby ensuring satisfactory removal of NOₓ for purification of exhaust gas.

Although in the above-described first through third embodiments the exhaust gas purification apparatuses 101-103 are mounted to the engine assembly 10 having the turbocharger 8, the exhaust gas purification apparatuses according to the present invention are not limited to such structure. In the case when the engine assembly 10 has no turbocharger such as 8, the exhaust gas purification apparatus may be directly connected to the outlet 5A of the exhaust manifold 5. In addition, the exhaust gas purification apparatus may be spaced away from the engine assembly 10. Although in the first through third embodiments the exhaust gas purification apparatuses 101-103 have the first oxidation catalyst layer 12, the DPF 14, the injection valve 19 and/or the injection valve 29 as one body in the casing 11, the present invention is not limited to such structure. For example, the DPF body 15 may be provided separately from the DPF 14. Although in the first and third embodiments the injection valve 19 is provided in the casing 11, the present invention is not limited to such structure. The injection valve 19 may be provided in a pipe connecting the casing 11 to the turbocharger 8. In such an arrangement, the time for urea water injected from the injection valve 19 to stay in the pipe before reaching the first oxidation catalyst layer 12 is lengthened, so that the efficiency of hydrolysis of urea water before it reaches the first oxidation catalyst layer 12 is improved. Accordingly, the efficiency of the hydrolysis of the injected urea water to ammonia and of the adsorption of ammonia to the ammonia adsorption layer 13 is improved.

Although in the first through third embodiments the first oxidation catalyst layer 12 and the ammonia adsorption layer 13 are provided integrally, they may be provided separately. For example, in the first embodiment the ammonia adsorption layer 13 may be located adjacently to the mixer 18. The DPF body 15 and the SCR catalyst 16 which are provided integrally in the first through third embodiments may be arranged separately. Although in the first through third embodiments each of the exhaust gas purification apparatuses 101-103 and the second oxidation catalyst layer 40 are provided separately, the second oxidation catalyst layer 40 may be located at any suitable position downstream of the DPF 14 within the casing 11 of the exhaust gas purification apparatuses 101-103.

Although in the first through third embodiments the casing 11 of the exhaust gas purification apparatuses 101-103 is formed of a cylindrical shape, it may be formed of a prism shape such as a quadratic prism, a spherical shape or an ellipsoidal shape. The exhaust gas purification apparatuses 101-103 of the first through third embodiments may dispense with the mixer 18.

The exhaust gas purification apparatus includes an oxidation catalyst, an ammonia adsorption portion, a selective catalytic reduction catalyst and a urea water supply device. The oxidation catalyst is provided in a passage through which exhaust gas flows. The ammonia adsorption portion is located in the passage downstream of the oxidation catalyst with respect to the flow of the exhaust gas and operable to adsorb ammonia. The selective catalytic reduction catalyst is located in the passage downstream of the ammonia adsorption portion. The urea water supply device is provided for supplying urea water to the passage upstream of the selective catalytic reduction catalyst.

## Claims

1. An exhaust gas purification apparatus (101, 102, 103) comprising:
an oxidation catalyst (12) provided in a passage through which exhaust gas flows;
a selective catalytic reduction catalyst (16) located in the passage downstream of the oxidation catalyst (12) with respect to the flow of the exhaust gas; and
a urea water supply device (19, 29) for supplying urea water to the passage upstream of the selective catalytic reduction catalyst (16),
**characterized in that**
an ammonia adsorption portion (13) is located in the passage downstream of the oxidation catalyst (12) and upstream of the selective catalytic reduction catalyst (16), wherein the ammonia adsorption portion (13) is operable to adsorb ammonia.

2. The exhaust gas purification apparatus (101) according to claim 1, **characterized in that** the urea water supply device (19) is operable to supply the urea water to the passage upstream of the oxidation catalyst (12).

3. The exhaust gas purification apparatus (103) according to claim 1, **characterized in that** the urea water supply device (19, 29) includes a first urea water supply device (19) and a second urea water supply device (29), wherein the first urea water supply device (19) is operable to supply the urea water to the passage upstream of the oxidation catalyst (12) and the second urea water supply device (29) is operable to supply the urea water to the passage downstream of the ammonia adsorption portion (13).

4. The exhaust gas purification apparatus (101, 103) according to claim 2 or 3, **characterized in that** the urea water supply device (19) which is operable to supply the urea water to the passage upstream of the oxidation catalyst (12) supplies the urea water when temperature of the oxidation catalyst (12) is not higher than temperature (T_{c}) at which the oxidation catalyst (12) is activated.

5. The exhaust gas purification apparatus (101, 103) according to claim 4, **characterized in that** the urea water supply device (19) stops supplying the urea water when temperature of the selective catalytic reduction catalyst (16) is not higher than temperature (Tₛ) at which the selective catalytic reduction catalyst (16) is activated.

6. The exhaust gas purification apparatus (102) according to claim 1, **characterized in that** the urea water supply device (29) is operable to supply the urea water to the passage downstream of the ammonia adsorption portion (13).

7. The exhaust gas purification apparatus (102) according to claim 6, **characterized in that** the urea water supply device (19) stops supplying the urea water when temperature of the selective catalytic reduction catalyst (16) is not higher than temperature (Tₛ) at which the selective catalytic reduction catalyst (16) is activated.

8. The exhaust gas purification apparatus (102) according to claim 6, **characterized in that** the urea water supply device (29) is located for directing the urea water toward a downstream end (13B) of the ammonia adsorption portion (13).

9. The exhaust gas purification apparatus (101, 102, 103) according to any one of claims 1 through 8, **characterized in that** the ammonia adsorption portion (13) is formed by coating a substrate provided on a downstream end face (12B) of the oxidation catalyst (12) with a material having ammonia adsorption property.

10. The exhaust gas purification apparatus (101, 102, 103) according to claim 9, **characterized in that** the substrate forming the ammonia adsorption portion (13) supports Fe zeolite and zirconia.

11. The exhaust gas purification apparatus (101, 102, 103) according to any one of claims 1 through 10, **characterized in that** a particulate matter collector (15) which is integrated with the selective catalytic reduction catalyst (16) is provided for collecting particulate matter (PM).

12. The exhaust gas purification apparatus (101, 102, 103) according to any one of claims 1 through 11, **characterized in that** a casing (11) has therein the oxidation catalyst (12), the ammonia adsorption portion (13), the selective catalytic reduction catalyst (16) and the urea water supply device (19, 29).

13. The exhaust gas purification apparatus (101, 102, 103) according to any one of claims 1 through 12, **characterized in that** the exhaust gas purification apparatus (101, 102, 103) is mounted to an engine assembly (10).

## Patentansprüche

1. Abgasreinigungsvorrichtung (101, 102, 103), die Folgendes aufweist:
einen Oxidationskatalysator (12), der in einem Durchgang vorgesehen ist, durch den Abgas strömt;
einen Katalysator (16) einer selektiven katalytischen Reaktion, der sich in dem Durchgang stromabwärtig des Oxidationskatalysators (12) hinsichtlich der Strömung des Abgases befindet; und
eine Harnstoffwasserzuführvorrichtung (19, 29) zum Zuführen von Harnstoffwasser zu dem Durchgang stromaufwärtig des Katalysators (16) der selektiven katalytischen Reaktion,
**dadurch gekennzeichnet, dass**
sich ein Ammoniakadsorptionsabschnitt (13) in dem Durchgang stromabwärtig des Oxidationskatalysators (12) und stromaufwärtig von dem Katalysator (16) der selektiven katalytischen Reaktion befindet, wobei der Ammoniakadsorptionsabschnitt (13) betriebsfähig ist, um Ammoniak zu adsorbieren.

2. Abgasreinigungsvorrichtung (101) nach Anspruch 1, **dadurch gekennzeichnet, dass** die Harnstoffwasserzuführvorrichtung (19) betriebsfähig ist, um das Harnstoffwasser zu dem Durchgang stromaufwärtig des Oxidationskatalysators (12) zuzuführen.

3. Abgasreinigungsvorrichtung (103) nach Anspruch 1, **dadurch gekennzeichnet, dass** die Harnstoffwasserzuführvorrichtung (19, 29) eine erste Harnstoffwasserzuführvorrichtung (19) und eine zweite Harnstoffwasserzuführvorrichtung (29) aufweist, wobei die erste Harnstoffwasserzuführvorrichtung (19) betriebsfähig ist, um das Harnstoffwasser zu dem Durchgang stromaufwärtig des Oxidationskatalysators (12) zuzuführen, und die zweite Harnstoffwasserzuführvorrichtung (29) betriebsfähig ist, um das Harnstoffwasser zu dem Durchgang stromabwärtig des Ammoniakadsorptionsabschnitts (13) zuzuführen.

4. Abgasreinigungsvorrichtung (101, 103) nach Anspruch 2 oder 3, **dadurch gekennzeichnet, dass** die Harnstoffwasserzuführvorrichtung (19), die betriebsfähig ist, um das Harnstoffwasser zu dem Durchgang stromaufwärtig des Oxidationskatalysators (12) zuzuführen, das Harnstoffwasser zuführt, wenn eine Temperatur des Oxidationskatalysators (12) nicht höher als eine Temperatur (T_{c}) ist, bei der der Oxidationskatalysator (12) aktiviert ist.

5. Abgasreinigungsvorrichtung (101, 103) gemäß Anspruch 4, **dadurch gekennzeichnet, dass** die Harnstoffwasserzuführvorrichtung (19) ein Zuführen des Harnstoffwassers stoppt, wenn eine Temperatur des Katalysators (16) der selektiven katalytischen Reaktion nicht höher als eine Temperatur (Tₛ) ist, bei der der Katalysator (16) der selektiven katalytischen Reaktion aktiviert ist.

6. Abgasreinigungsvorrichtung (102) nach Anspruch 1, **dadurch gekennzeichnet, dass** die Harnstoffwasserzuführvorrichtung (29) betriebsfähig ist, um das Harnstoffwasser zu dem Durchgang stromabwärtig des Ammoniakadsorptionsabschnitts (13) zuzuführen.

7. Abgasreinigungsvorrichtung (102) nach Anspruch 6, **dadurch gekennzeichnet, dass** die Harnstoffwasserzuführvorrichtung (19) ein Zuführen des Harnstoffwassers stoppt, wenn eine Temperatur des Katalysators (16) der selektiven katalytischen Reaktion nicht höher als eine Temperatur (Tₛ) ist, bei der der Katalysator (16) der selektiven katalytischen Reaktion aktiviert ist.

8. Abgasreinigungsvorrichtung (102) nach Anspruch 6, **dadurch gekennzeichnet, dass** die Harnstoffwasserzuführvorrichtung (29) zum Leiten des Harnstoffwassers zu einem stromabwärtigen Ende (13B) des Ammoniakadsorptionsabschnitts (13) platziert ist.

9. Abgasreinigungsvorrichtung (101, 102, 103) nach einem der Ansprüche 1 bis 8, **dadurch gekennzeichnet, dass** der Ammoniakadsorptionsabschnitt (13) durch ein Beschichten eines Substrats, das an einer stromabwärtigen Endfläche (12B) des Oxidationskatalysators (12) vorgesehen ist, mit einem Material mit einer Ammoniakadsorptionseigenschaft ausgebildet ist.

10. Abgasreinigungsvorrichtung (101, 102, 103) nach Anspruch 9, **dadurch gekennzeichnet, dass** das Substrat, das den Ammoniakadsorptionsabschnitt (13) bildet, Fe-Zeolith und Zirkoniaerde unterstützt.

11. Abgasreinigungsvorrichtung (101, 102, 103) gemäß einem der Ansprüche 1 bis 10, **dadurch gekennzeichnet, dass** ein Partikelkollektor (15), der in dem Katalysator (16) der selektiven katalytischen Reaktion integriert ist, zum Sammeln von Partikeln (PM) vorgesehen ist.

12. Abgasreinigungsvorrichtung (101, 102, 103) gemäß einem der Ansprüche 1 bis 11, **dadurch gekennzeichnet, dass** ein Gehäuse (11) in sich den Oxidationskatalysator (12), den Ammoniakadsorptionsabschnitt (13), den Katalysator (16) der selektiven katalytischen Reaktion und die Harnstoffzuführvorrichtung (19, 29) aufweist.

13. Abgasreinigungsvorrichtung (101, 102, 103) gemäß einem der Ansprüche 1 bis 12, **dadurch gekennzeichnet, dass** die Abgasreinigungsvorrichtung (101, 102, 103) an einem Maschinenzusammenbau (10) montiert ist.

## Revendications

1. Appareil (101, 102, 103) de purification de gaz d'échappement comprenant :
un catalyseur d'oxydation (12) prévu dans un passage à travers lequel les gaz d'échappement s'écoulent ;
un catalyseur (16) de réduction catalytique sélective situé dans le passage en aval du catalyseur d'oxydation (12) par rapport au flux des gaz d'échappement ; et
un dispositif (19, 29) d'alimentation en eau-urée destiné à fournir de l'eau-urée au passage en amont du catalyseur (16) de réduction catalytique sélective,
**caractérisé en ce que**
une partie (13) d'adsorption d'ammoniac est placée dans le passage en aval du catalyseur d'oxydation (12) et en amont du catalyseur (16) de réduction catalytique sélective, où la partie (13) d'adsorption d'ammoniac peut fonctionner pour adsorber de l'ammoniac.

2. Appareil (101) de purification de gaz d'échappement selon la revendication 1, **caractérisé en ce que** le dispositif (19) d'alimentation en eau-urée peut fonctionner pour alimenter de l'eau-urée au passage en amont du catalyseur d'oxydation (12).

3. Appareil (103) de purification de gaz d'échappement selon la revendication 1, **caractérisé en ce que** le dispositif (19, 29) d'alimentation en eau-urée comporte un premier dispositif (19) d'alimentation en eau-urée et un deuxième dispositif (29) d'alimentation en eau-urée, où le premier dispositif (19) d'alimentation en eau-urée peut fonctionner pour alimenter de l'eau-urée au passage en amont du catalyseur d'oxydation (12) et le deuxième dispositif (29) d'alimentation en eau-urée peut fonctionner pour alimenter de l'eau-urée au passage en aval de la partie (13) d'adsorption d'ammoniac.

4. Appareil (101, 103) de purification de gaz d'échappement selon la revendication 2 ou 3, **caractérisé en ce que** le dispositif (19) d'alimentation en eau-urée qui peut fonctionner pour alimenter de l'eau-urée au passage en amont du catalyseur d'oxydation (12) fournit de l'eau-urée lorsque la température du catalyseur d'oxydation (12) n'est pas supérieure à la température (Tc) à laquelle le catalyseur d'oxydation (12) est activé.

5. Appareil (101, 103) de purification de gaz d'échappement selon la revendication 4, **caractérisé en ce que** le dispositif (19) d'alimentation en eau-urée arrête l'alimentation de l'eau-urée lorsque la température du catalyseur (16) de réduction catalytique sélective n'est pas supérieure à la température (Ts) à laquelle le catalyseur (16) de réduction catalytique sélective est activé.

6. Appareil (102) de purification de gaz d'échappement selon la revendication 1, **caractérisé en ce que** le dispositif (29) d'alimentation en eau-urée peut fonctionner pour alimenter de l'eau-urée au passage en aval de la partie (13) d'adsorption d'ammoniac.

7. Appareil (102) de purification de gaz d'échappement selon la revendication 6, **caractérisé en ce que** le dispositif (19) d'alimentation en eau-urée arrête l'alimentation de l'eau-urée lorsque la température du catalyseur (16) de réduction catalytique sélective n'est pas supérieure à la température (Ts) à laquelle le catalyseur (16) de réduction catalytique sélective est activé.

8. Appareil (102) de purification de gaz d'échappement selon la revendication 6, **caractérisé en ce que** le dispositif (29) d'alimentation en eau-urée est placé afin de diriger l'eau-urée vers une extrémité en aval (13B) de la partie (13) d'adsorption d'ammoniac.

9. Appareil (101, 102, 103) de purification de gaz d'échappement selon l'une quelconque des revendications 1 à 8, **caractérisé en ce que** la partie (13) d'adsorption d'ammoniac est formée par revêtement d'un substrat prévu sur une face (12B) d'extrémité en aval du catalyseur d'oxydation (12) avec un matériau ayant la propriété d'adsorption d'ammoniac.

10. Appareil (101, 102, 103) de purification de gaz d'échappement selon la revendication 9, **caractérisé en ce que** le substrat formant la partie (13) d'adsorption d'ammoniac supporte de la zéolite à base de Fe et de la zircone.

11. Appareil (101, 102, 103) de purification de gaz d'échappement selon l'une quelconque des revendications 1 à 10, **caractérisé en ce qu'**un collecteur (15) de matière particulaire qui est combiné avec le catalyseur (16) de réduction catalytique sélective est prévu pour collecter la matière particulaire (PM).

12. Appareil (101, 102, 103) de purification de gaz d'échappement selon l'une quelconque des revendications 1 à 11, **caractérisé en ce que** le catalyseur d'oxydation (12), la partie (13) d'adsorption d'ammoniac, le catalyseur (16) de réduction catalytique sélective et le dispositif (19, 29) d'alimentation en eau d'urée se trouvent dans un carter (11).

13. Appareil (101, 102, 103) de purification de gaz d'échappement selon l'une quelconque des revendications 1 à 12, **caractérisé en ce que** l'appareil (101, 102, 103) de purification de gaz d'échappement est monté sur un ensemble moteur (10).
